(19) Europäisches Patentamt
European Patent Office
Office européen des brevets

(11) Publication number: **0 409 313 A2**

(12) **EUROPEAN PATENT APPLICATION**

(21) Application number: **90201855.5**

(22) Date of filing: **10.07.90**

(51) Int. Cl.5: **C08G 64/14**, C08G 64/12, C08G 64/18

(30) Priority: **19.07.89 IT 2122789**

(43) Date of publication of application: **23.01.91 Bulletin 91/04**

(84) Designated Contracting States: **AT BE CH DE DK ES FR GB GR LI LU NL SE**

(71) Applicant: **MONTEDIPE S.r.l.**
**16, Piazza della Repubblica**
**I-20124 Milan(IT)**

(72) Inventor: **Petri, Alberto**
**Via B. Bellincione 10**
**I-20134 Milan(IT)**
Inventor: **Poggio, Sergio**
**Via Pecorini 14**
**I-20138 Milan(IT)**

(74) Representative: **Roggero, Sergio et al**
**Ing. Barzanò & Zanardo Milano S.p.A. Via Borgonuovo 10 10**
**I-20121 Milano(IT)**

(54) **Poly carbonates endowed with high-fluidity characteristics and process for preparing them.**

(57) Linear, thermoplastic, aromatic polycarbonates having an average viscosimetric molecular weight comprised within the range of from 10,000 to 30,000, endowed with high fluidity in the molten state, are obtained by means of the use of chain capping agents of the kind of aromatic or cycloaliphatic p-hydroxyanilides, having the general formula:

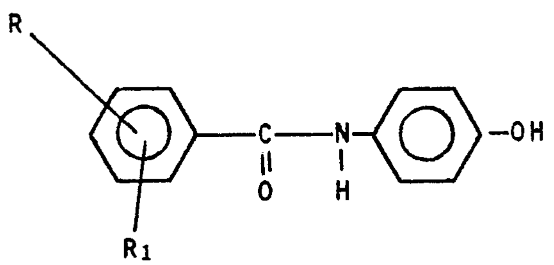

(II)

wherein:
R is an either linear or branched alkyl radical, containing from 1 to 4 carbon atoms, or is a hydrogen atom or is a halogen atom;
$R_1$ is either hydrogen or halogen;
and the corresponding compounds in which the ring bearing the R and $R_1$ substituents is a saturated ring.

EP 0 409 313 A2

# POLYCARBONATES ENDOWED WITH HIGH-FLUIDITY CHARACTERISTICS AND PROCESS FOR PREPARING THEM

The present invention relates to linear, thermoplastic, aromatic polycarbonates endowed with high fluidity in the molten state.

Polycarbonates are well-known in the art thanks to their excellent physical and mechanical properties, which render then particularly suitable for manufacturing products displaying high impact strength, and high dimensional stability and heat resistance.

The processing of polycarbonates by means of the moulding techniques requires the use of high temperatures, of from 270 to 320° C, which make it possible the molten polymer to be given the necessary fluidity in order to enable said molten polymer to be successfully submitted to the fabrication processes.

However, the fluidity which one is capable of obtaining causes difficulties in case complex-shape parts are moulded, and furthermore does not make it possible fast moulding cycles to be accomplished.

Inasmuch as an increase in the fluidity of the molten polymer cannot be obtained by increasing the processing temperature over the above said values, owing to the arising of phenomena of degradation of the same polymer, the most widely used technique in order to improve the fluidity characteristics of the molten polymer consists of reducing the molecular weight of polycarbonate used.

The molecular weight of polycarbonates is usually controlled by means of the use, as chain capping agents, of monofunctional phenolic compounds, such as phenol, p- tert.-butyl-phenol and 2,6-dimethylphenol.

Unfortunately, the use of polycarbonates having a reduced molecular weight, obtained by means of the use of these chain capping agents, causes a decrease in the mechanical properties of the obtained products, in particular as relates to their impact strength.

This occurrence manifests itself as a sudden loss of ductility of polycarbonate at temperatures lower than room temperature.

Such a strength loss can be attenuated by using, in lieu of the above said chain capping agents, branched alkyl-phenolic compounds with 8 or 9 carbon atoms in their alkyl chain, as disclosed in U.S. patent No. 4,269,964.

The use of the above said chain capping agents does not anyway make it possible polycarbonate to be given a higher fluidity than as obtainable by using the traditional chain capping agents.

European patent application EP-249,882 discloses on the contrary the use of alkyl-phenolic chain capping agents, with an alkyl chain of from 4 to 7 carbon atoms.

The so obtained polycarbonates display an improved fluidity, but undergo a simultaneous decay of their thermal properties, with the consequent decrease of the temperature range within which the products obtained from them can be applied.

The present Applicant has found now that the drawbacks of the prior art can be overcome, and linear, thermoplastic, aromatic polycarbonates having an average viscosimetric molecular weight comprised within the range of from 10,000 to 30,000, endowed with high fluidity in the molten state and simultaneously displaying excellent mechanical and thermal properties can be obtained by means of the use of particular compounds belonging to the class of aromatic or cycloaliphatic p-hydroxy-anilides, selected from among those having the general formula:

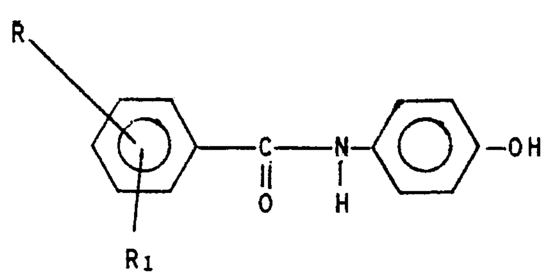

(II)

wherein:

R is an either linear or branched alkyl radical, containing from 1 to 4 carbon atoms, or is a hydrogen atom or a halogen atom, preferably chlorine;

$R_1$ is either hydrogen or halogen, preferably chlorine;

and the corresponding compounds in which the ring bearing the R and $R_1$ substituents is a saturated ring,

as chain capping agents.

Therefore, a purpose of the present invention are said linear, thermoplastic, aromatic polycarbonates having a high fluidity in the molten state.

A further purpose of the present invention is the process for obtaining said polycarbonates.

More particularly, in accordance with the present invention, said polycarbonates are obtained from

(1) at least one dihydroxyaromatic compound having the formula:

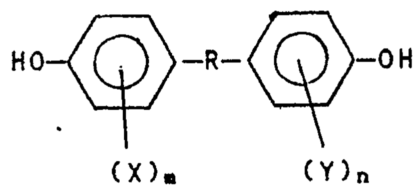

(I)

wherein:

R is a single bond, or a linear or branched, either substituted or non-substituted, alkylene radical of from 1 to 5 carbon atoms, or a group selected from among O, S, $SO_2$, CO;

X, Y which can be either equal to, or different from, each other, are H or $CH_3$,

m, n which can be either equal to or different from each other, are integers comprised within the range of from 1 to 4;

(2) a carbonate precursor;

(3) at least one compound belonging to the class of the aromatic or cycloaliphatic p-hydroxyanilides, selected among those having the general formula:

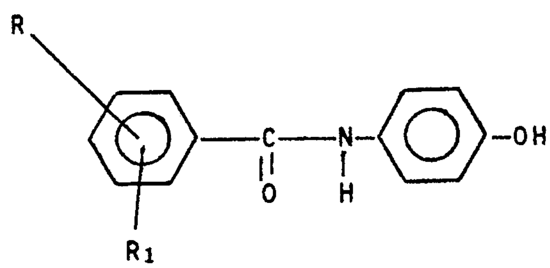

(II)

wherein:

R is an either linear or branched alkyl radical, containing from 1 to 4 carbon atoms, or is a hydrogen atom or a halogen atom, preferably chlorine;

$R_1$ is either hydrogen or halogen, preferably chlorine;

and the corresponding compounds in which the ring bearing the R and $R_1$ substituents is a saturated ring.

Some examples of dihydroxyaromatic compounds (1) falling within the scope of formula (I) which can be used are, in particular:

* 4,4′-dihydroxybiphenyl;
* 2,2-bis-(4-hydroxyphenyl)-propane (bisphenol A);
* 2,2-bis-(3,5-dimethyl-4-hydroxyphenyl)-propane;
* bis-(4-hydroxyphenyl)-methane.

The carbonate precursor can be phosgene or an alkyl, aryl or arylalkyl ester of carbonic acid, such as, e.g., diphenyl carbonate, or can be a chloroformyl-capped polycarbonate oligomer having a molecular weight comprised within the range of from 400 to 2,000, obtained by means of the reaction of phosgene with a portion of the total amount of the dihydroxyaromatic compound (I).

The aromatic or cycloaliphatic p-hydroxyanilidic compounds (3) to be used as chain capping agents according to the present invention, can be obtained by using methodologies known from organic chemistry.

For exemplifying purposes, they can be prepared in a simple way by means of the reaction of p-hydroxyaniline with the chloride of an acid selected from among those falling within the scope of the formula:

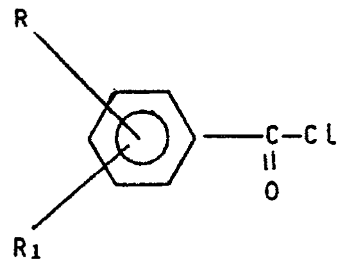

wherein:

R, $R_1$ have the same meaning as reported hereinabove, and the corresponding compounds in which the ring is a saturated one, with the reaction being carried out in an organic solvent, such as e.g., acetone, at a temperature of the order of from 50 to 60 °C, and with a molar ratio of p-hydroxyaniline to the acyl chloride being used, which is twice as large as the stoichiometric value, such that hydrochloric acid developed may react with the amine excess.

Some examples of p-hydroxyanilidic compounds (3) particularly suitable for the purposes of the present invention, are the following:

* N-4-chlorobenzoyl-p-hydroxyaniline;
* N-cyclohexanoyl-p-hydroxyaniline;
* N-benzoyl-p-hydroxyaniline;
* N-4-tert.-butylbenzoyl-p-hydroxyaniline;
* N-4-methylbenzoyl-p-hydroxyaniline;
* N-3,5-dichlorobenzoyl-p-hydroxyaniline.

The polycarbonates according to the present invention have an average viscosimetric molecular weight comprised within the range of from 10,000 to 30,000, and preferably have an average viscosimetric molecular weight comprised within the range of from 15,000 to 25,000.

According to the present invention, said high-fluidity polycarbonates can be prepared by reacting, according to one among the polymerization techniques customarily used in order to produce polycarbonates:

(1) a dihydroxyaromatic compound falling within the scope of formula (I),

(2) a carbonate precursor,

(3) an either aromatic or cycloaliphatic p-hydroxyanilidic compound, as the chain capping agent, selected from among the compounds of formula (II) and the corresponding compounds in which the ring bearing the R and $R_1$ substituents is a saturated one, with the molar ratio of (3):(1) being comprised within the range of from 2:100 to 10:100, and being preferably comprised within the range of from 3.5:100 to 7:100.

One from the polymerization techniques which can be advantageously used is the so-said "interface polycondensation technique".

Such a technique consists of carrying out the reaction of polymerization in a biphasic system constituted by an alkaline solution, e.g., an aqueous solution of sodium hydroxide, and an organic solvent immiscible with water, such as, e.g., methylene chloride.

The dihydroxyaromatic compound (I) is dissolved in the aqueous phase, whilst the p-hydroxyanilidic chain capping agent (3) is soluble in the organic phase.

Through such a double-phase system containing the dihydroxyaromatic compound (1) and the p-hydroxyanilidic compound (3), phosgene gas is then bubbled and the reaction is then maintained at a temperature comprised within the range of from 15 to 25 °C for a time comprised within the range of from 20 minutes to 6 hours, in the presence of a phase transfer catalyst, such as, e.g., triethylamine.

According to a preferred form of practical embodiment of the present invention, polycarbonates can be obtained by using, as carbonate precursors, chloroformyl-capped polycarbonate oligomers, which can be prepared by means of the interface reaction between phosgene and a portion of the total amount of dihydroxyaromatic compound (1).

Said chloroformyl-capped oligomers, whose molecular weight can be comprised within the range of from 400 to 2,000, are then dissolved in an organic solvent immiscible with water and are reacted, still according to the interface polycondensation technique, with the residual amount of dihydroxyaromatic compound, in the presence of the p-hydroxyanilidic compound (3) as the chain capping agent, and a phase-transfer catalyst.

Alternatively to the interface polycondensation, the polycarbonates according to the present invention can be obtained according to the well-known methodology of solution polycondensation.

In this case, phosgene gas is bubbled through a solution of methylene chloride and pyridine, containing the dihydroxyaromatic compound (1) and the chain capping agent (3).

Said polycarbonates can be obtained as well by means of the technique of transesterification in the molten state, by reacting dialkyl, diaryl, or alkyl-aryl-esters of carbonic acid, as carbonate precursors, with the dihydroxyaromatic compound (1) and the p-hydroxyanilidic compound (3), at a temperature comprised within the range of from 100 to 300° C, in the presence of transesterification catalysts.

The polycarbonates according to the present invention, obtained by using as chain capping agents the p-hydroxyanilidic compounds (3), show a very high fluidity, as it can be clearly seen from the following examples, and display excellent mechanical properties, above all as regards their impact strength at lower than room temperatures.

They are suitable for being fabricated by injection moulding and, thanks to their above said characteristics, can be advantageously used in order to manufacture complex-shaped parts.

Furthermore, said polycarbonates make it possible fast moulding cycles to be accomplished, with the advantage that increases in throughput and productivity, and decreases in costs are accomplished.

On the polycarbonates according to the present invention, the following characterizing tests were carried out.

Melt Flow Index (MFI)

The extrusion rate of the molten polymer ("MFI") is determined by means of the "melt indexer" on the extruded granule, according to ASTM D 1238, under the following operating conditions: load 1.2 kg, temperature 300° C.

(IZOD) Impact Strength

Izod impact strength is evaluated on specimens with notch, according to ASTM D 256, within the temperature range of from 23 to 0° C.

Vicat

This property is evaluated according to ASTM D 1575 ("A" Condition).

Inherent Viscosity ($\eta$)

The inherent viscosity is evaluated in methylene chloride at 20° C by means of the Ubbelhode viscometer, and is expressed as dl/g.

The following experimental Examples are reported for merely illustrative purposes, and in no way shall they be construed as being limitative of the purview of the same invention.

## Example 1

Preparation of N-4-chlorobenzoyl-p-hydroxyaniline

20 g (183 mmol) of p-aminophenol dissolved in 120 ml of acetone is charged to a 4-necked flask of 250 ml equipped with magnetic stirrer, thermometer and reflux condenser, by operating under a blanketing atmosphere of an inert gas.

To this solution 16 g (91.5 mmol) of 4-chlorobenzoyl chloride dissolved in 30 ml of acetone is then added dropwise over a 15-minutes time, and the so obtained mixture is then heated to its boiling temperature and is kept one hour at said temperature.

The reaction mixture is then allowed to cool down to room temperature and is finally poured in 4 litres of deionized water kept with stirring.

Approximately one hour later, the precipitated product is recovered by filtration. The filter cake is washed with deionized water (4 portions of 500 ml each), and is dried in vacuo at 120 °C for 4 hours.

21.5 g of N-4-chlorobenzoyl-p-hydroxyaniline, equivalent to a yield of 95%, is obtained.

The obtained product was characterized as follows:

| | |
|---|---|
| * Melting point (DSC) = | 250 °C |
| * (Acidimetric) equivalent weight = | 248.8 |
| (Theoretical value) = | 247.7 |

| * Elemental Analysis : | | | | |
|---|---|---|---|---|
| | C | H | N | Cl |
| Experimental, % | 62.8 | 4.1 | 5.5 | 14.6 |
| Theoretical, % | 63.0 | 4.1 | 5.7 | 14.3 |

The structure of the product was confirmed by N.M.R. spectroscopic analysis and mass spectrometry.

## Example 2

### Preparation of N-cyclohexanoyl-p-hydroxy-aniline

The process is carried out by operating in the same way as of Example 1, with 20 g (183 mmol) of p-aminophenol and 13.4 g (91.5 mmol) of cyclohexanoyl chloride being used.

19.5 g of N-cyclohexanoyl-p-hydroxy-aniline is obtained, which corresponds to a yield of 97.2%.

The obtained product was characterized as follows:

| | |
|---|---|
| * Melting point (DSC) = | 206 °C |
| * (Acidimetric) equivalent weight = | 218.5 |
| (Theoretical value) = | 219.2 |

| * Elemental Analysis : | | | |
|---|---|---|---|
| | C | H | N |
| Experimental, % | 71.4 | 7.9 | 6.4 |
| Theoretical, % | 71.2 | 7.8 | 6.4 |

The structure of the product was confirmed by N.M.R. spectroscopic analysis and mass spectrometry.

## Example 3

### Preparation of N-3,5-dichlorobenzol-p-hydroxy-aniline

The process is carried out by operating in the same way as of Example 1, with 30 g (275 mmol) of p-aminophenol and 28.8 g (137.5 mmol) of 3,5-dichlorobenzoyl chloride being used.

37.5 g of N-3,5-dichlorobenzoyl-p-hydroxy-aniline is obtained, which corresponds to a yield of 96.7%.

The obtained product was characterized as follows:

| | |
|---|---|
| * Melting point (DSC) =<br>* (Acidimetric) equivalent weight =<br>(Theoretical value) = | 232 °C<br>280.2<br>282.1 |

| * Elemental Analysis : | | | | |
|---|---|---|---|---|
| | C | H | N | Cl |
| Experimental, % | 55.5 | 3.3 | 4.8 | 25.0 |
| Theoretical, % | 55.3 | 3.2 | 4.9 | 25.1 |

The structure of the product was confirmed by N.M.R. spectroscopic analysis and mass spectrometry.

## Example 4

### Preparation of N-benzoyl-p-hydroxyaniline

49.6 g (455 mmol) of p-aminophenol dissolved in 200 ml of acetone is charged to a 4-necked flask of 500 ml equipped with magnetic stirrer, thermometer and reflux condenser, by operating under a blanketing atmosphere of an inert gas.

To this solution 32 g (227.5 mmol) of benzoyl chloride dissolved in 30 ml of acetone is then added dropwise over a 15-minutes time. The so obtained mixture is then refluxed for one hour.

After being let cool down to room temperature, the reaction mixture is then poured in 2 litres of deionized water and the precipitated product is then filtered off, is washed with deionized water (4 portions of 500 ml each), and is dried in vacuo at 120 °C for 4 hours.

The obtained product is further purified by crystallization in 2.5 litres of a 2:1 mixture of water and acetic acid, containing 15 g of zinc powder (in order to eliminate any coloured impurities).

Zinc is then hot filtered off and the reaction product is caused to precipitate under low temperature conditions, and then is filtered, washed with deionized water and dried under vacuum at 120 °C for 4 hours.

35.3 g of N-benzoyl-p-hydroxyaniline, equivalent to a yield of 72.8%, is obtained.

The obtained product was characterized as follows:

| | |
|---|---|
| * Melting point (DSC) =<br>* (Acidimetric) equivalent weight =<br>(Theoretical value) = | 221.3 °C<br>210.7<br>213 |

| * Elemental Analysis : | | | |
|---|---|---|---|
| | C | H | N |
| Experimental, % | 72.9 | 5.2 | 6.7 |
| Theoretical, % | 73.2 | 5.2 | 6.6 |

The structure of the product was confirmed by N.M.R. spectroscopic analysis and mass spectrometry.

## Example 5

### Preparation of N-4-tert.-butylbenzoyl-p-hydroxy-aniline

The process is carried out by operating in the same way as of Example 4, with 32.7 g (300 mmol) of p-aminophenol (dissolved in 200 ml of acetone) and 29.5 g (150 mmol) of 4-tert.-butyl-benzoyl chloride (dissolved in 40 ml of acetone), in lieu of benzoyl chloride, being used.

The end crystallization is carried out by using a 1:1 water/acetone mixture (800 ml).

34.5 g of N-4-tert.-butyl-benzoyl-p-hydroxy-aniline is obtained, which corresponds to a yield of 85.5%.

The product was characterized as follows:

| | |
|---|---|
| * Melting point (DSC) = | 208.6 °C |
| * (Acidimetric) equivalent weight = | 262.8 |
| (Theoretical value) = | 269 |

| * Elemental Analysis : | | | |
|---|---|---|---|
| | C | H | N |
| Experimental, % | 76.0 | 7.2 | 5.3 |
| Theoretical, % | 75.8 | 7.1 | 5.2 |

The structure of the product was confirmed by N.M.R. spectroscopic analysis and mass spectrometry.

## Example 6

### Preparation of N-4-methylbenzoyl-p-hydroxy-aniline

The process is carried out by operating in the same way as of Example 4, with 32.7 g (300 mmol) of p-aminophenol in 200 ml of acetone and 30.9 g (200 mmol) of 4-methyl-benzoyl chloride (dissolved in 40 ml of acetone), in lieu of benzoyl chloride, being used.

The end crystallization is carried out by using a 1:1 water/acetone mixture (800 ml).

40.6 g of N-4-methyl-benzoyl-p-hydroxy-aniline is obtained, which corresponds to a yield of 87.1%.

The product was characterized as follows:

| | |
|---|---|
| * Melting point (DSC) = | 218 °C |
| * (Acidimetric) equivalent weight = | 226.6 |
| (Theoretical value) = | 227 |

| * Elemental Analysis : | | | |
|---|---|---|---|
| | C | H | N |
| Experimental, % | 74.4 | 5.7 | 6.3 |
| Theoretical, % | 74.0 | 5.7 | 6.2 |

The structure of the product was confirmed by N.M.R. spectroscopic analysis and mass spectrometry.

## Example 7

84 g of bisphenol A, 4.02 g of N-4-chlorobenzoyl-p-hydroxy-aniline (4.4% by mol relatively to bisphenol A), 65.2 g of sodium hydroxide dissolved in 650 ml of water, 20 mg of sodium dithionite (as a reducing agent in order to prevent coloured products from being formed) and 7.4 ml of an 0.05 N aqueous solution of triethylamine are charged under a nitrogen stream to a glass reactor of 3 litres of capacity, kept at the controlled temperature of 25° C.

1,300 ml of methylene chloride is then added, and 44 g of phosgene gas is bubbled within a 30-minutes time through the resulting mixture, while this latter is being kept vigorously stirred.

The reaction is made proceed for 2 hours, with aqueous sodium hydroxide (at 20% by weight) being added in order to keep the reaction mixture at a pH value higher than 11.

At the end the reaction mixture is diluted with 500 ml of methylene chloride and the organic phase is separated and washed, in the stated sequence, with 300 ml of water (twice), 800 ml of 0.15 N sodium hydroxide (3 times), 600 ml of water (twice), 800 ml of 0,1 N hydrochloric acid and finally with portions of 600 ml of water until neutral washes are obtained.

The polymer is then recovered by distilling off the organic solvent, is dried and is ground until a powder is obtained.

The characteristics of the so obtained polycarbonate are reported in Table 1.

As regards, in particular, the impact strength, measured within the temperature range of from 23 to 0° C, in Table 1 the values relevant to 10 samples, prepared according to ASTM D 256, are reported.

The figures quoted in brackets indicate the number of samples showing a determined behaviour.

## Example 8

Example 7 is repeated with the same operating modalities and amounts of reactants, except that 3.50 g of N-cyclohexanoyl-p-hydroxyaniline (4.4% by mol relatively to bisphenol A) is used in lieu of N-4-chlorobenzoyl-p-hydroxyaniline.

The characteristics of the so obtained polymer are reported in Table 1.

## Example 9

Example 7 is repeated with the same operating modalities and amounts of reactants, except that 2.43 g of p-tert.-butylphenol (4.4% by mol relatively to bisphenol A) is used in lieu of N-4-chlorobenzoyl-p-hydroxyaniline.

The characteristics of the so obtained polymer are reported in Table 1.

## Example 10

286.1 g of chloroformyl-capped polycarbonate oligomers (number average molecular weight = 690; chloroformyl end groups = 2,796 meq/kg; hydroxy end groups = 103 meq/kg), prepared from bisphenol A

and phosgene, is dissolved in 1,227 ml of methylene chloride and the resulting solution is charged, under a nitrogen stream, to a glass reactor of 2.5 l of capacity, kept at the controlled temperature or 25 °C.

The following are then added to said mixture, kept mechanically stirred by means of a double-anchor stirring means (running at 300 rpm), in the order shown:

* 70 ml of water containing 2.5 g of sodium hydroxide,
* 13.9 g of N-4-chorobenzoyl-p-hydroxyaniline (4.1% by mol relatively to total bisphenol A),
* 31 mg of sodium dithionite, and
* 8 ml of an 0,05 N aqueous solution of triethylamine.

After 40 minutes, 400 ml of water containing 79.5 g of bisphenol A, 29.1 g of sodium hydroxide and 31 mg of sodium dithionite are added.

Then 131.2 ml of an aqueous solution of sodium hydroxide at 20% by weight is added to the mixture within a 10-minutes time, by using a metering pump.

Three hours later, the reaction mixture is poured in 3 l of methylene chloride and the organic phase is then separated and washed, in the order stated, with 900 ml of water (twice), 1,300 ml of 0.15 N aqueous sodium hydroxide (3 times), 900 ml of water (twice), 1,300 ml of 0.1 N hydrochlorid acid, and, finally, with portions of 900 ml of water until neutral washes are obtained.

The polymer is recovered by distilling off the organic solvent, is dried and is ground until a powder is obtained.

The characteristics of the so obtained polycarbonate are reported in Table 1.

## Example 11

Example 10 is repeated with the same operating modalities and amounts of reactants, except that 12.3 g of N- cyclohexanoyl-p-hydroxyaniline (4.1% by mol relatively to total bisphenol A) is used in lieu of N-4-chorobenzoyl-p-hydroxyaniline.

The characteristics of the so obtained polycarbonate are reported in Table 1.

## Example 12

Example 10 is repeated with the same operating modalities and amounts of reactants, except that 11.9 g of N- benzoyl-p-hydroxyaniline (4.1% by mol relatively to total bisphenol A) is used in lieu of N-4-chorobenzoyl-p-hydroxyaniline.

The characteristics of the so obtained polycarbonate are reported in Table 1.

## Example 13

Example 10 is repeated with the same operating modalities and amounts of reactants, except that 12.7 g of N-4-methyl-benzoyl-p-hydroxyaniline (4.1% by mol relatively to total bisphenol A) is used in lieu of N-4-chorobenzoyl-p-hydroxyaniline.

The characteristics of the so obtained polycarbonate are reported in Table 1.

## Example 14

Example 10 is repeated with the same operating modalities and amounts of reactants, except that 15.1 g of N-tert.-butylbenzoyl-p-hydroxyaniline (4.1% by mol relatively to total bisphenol A) is used in lieu of N-4-chorobenzoyl-p-hydroxyaniline.

The characteristics of the so obtained polycarbonate are reported in Table 1.

## Example 15

Example 10 is repeated with the same operating modalities and amounts of reactants, except that 8.32 g of p-tert.-butylphenol (4.1% by mol relatively to total bisphenol A) is used in lieu of N-4-chorobenzoyl-p-hydroxyaniline.

The characteristics of the so obtained polycarbonate are reported in Table 1.

Table 1 .

| Example | Inherent viscosity 20°C $CH_2Cl_2$ (dl/g) | Impact Strength (Izod) (j/m) | | | MFI (300°C 1.2 kg) | $T_g$ (°C) | VICAT (°C) |
|---|---|---|---|---|---|---|---|
| | | 23°C | 10°C | 0°C | | | |
| 7 | 0.464 | 730 | 620 | 560 (6)<br>140 (4) | 21 | 150 | 150.5 |
| 8 | 0.458 | 660 | 600 (8)<br>210 (2) | 590 (5)<br>150 (5) | 26 | 150 | 151 |
| 9 | 0.471 | 690 | 580 (1)<br>125 (9) | 115 | 18.5 | 149 | 150 |
| 10 | 0.457 | 715 | 600 | 540 (5)<br>130 (5) | 20 | 152 | 152.5 |
| 11 | 0.467 | 670 | 580 (9)<br>190 (1) | 565 (5)<br>145 (5) | 27.5 | 150 | 151 |
| 12 | 0.460 | 705 | 610 | 540 (6)<br>150 (4) | 24 | 151 | 151.5 |
| 13 | 0.465 | 700 | 640 | 580 (7)<br>150 (3) | 24 | 154 | 153 |

(continuation of Table 1)

| Example | Inherent viscosity 20° C $CH_2Cl_2$ (dl/g) | Impact Strength (Izod) (j/m) 23° C | 10° C | 0° C | MFI (300° C 1.2 kg) | $T_g$ (° C) | VICAT (° C) |
|---|---|---|---|---|---|---|---|
| 14 | 0.461 | 695 | 620 | 580 (5)<br>160 (5) | 24 | 151 | 151,5 |
| 15 | 0.462 | 660 | 595 (1)<br>130 (9) | 120 | 19 | 149 | 150 |

## Claims

1. Linear, thermoplastic, aromatic polycarbonates having an average viscosimetric molecular weight comprised within the range of from 10,000 to 30,000, endowed with high fluidity in the molten state, deriving from:

(1) at least one dihydroxyaromatic compound having the formula:

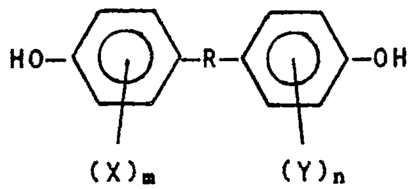

(I)

wherein:

R is a single bond, or a linear or branched, either substituted or non-substituted, alkylene radical of from 1 to 5 carbon atoms, or a group selected from among O, S, $SO_2$, CO;

X, Y which can be either equal to, or different from, each other, are H or $CH_3$,

m, n which can be either equal to or different from each other, are integers comprised within the range of from 1 to 4;

(2) a carbonate precursor;

(3) at least one compound belonging to the class of the aromatic or cycloaliphatic p-hydroxyanilides, selected from among those having the general formula:

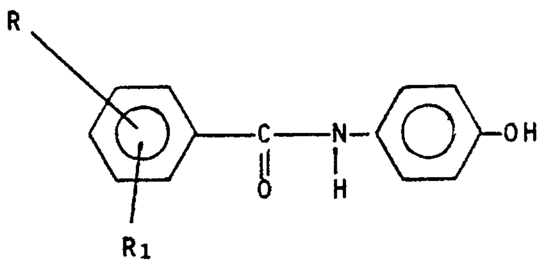

(II)

wherein:

R is an either linear or branched alkyl radical, containing from 1 to 4 carbon atoms, or is a hydrogen atom or a halogen atom,

$R_1$ is either hydrogen or halogen;

and the corresponding compounds in which the ring bearing the R and $R_1$ substituents is a saturated ring.

2. Polycarbonates according to claim 1, characterized in that said carbonate precursor (2) is selected from among phosgene or aryl, alkyl or arylalkyl esters of carbonic acid, or chloroformyl-capped polycarbonate oligomers having a molecular weight comprised within the range of from 400 to 2,000, obtained by means of the reaction of phosgene with a portion of the total amount of the dihydroxyaromatic compound (I).

3. Polycarbonates according to claim 1, characterized in that they have an average viscosimetric molecular weight comprised within the range of from 15,000 to 25,000.

4. Polycarbonates according to claim 1, characterized in that the dihydroxyaromatic compound (1) is selected from among:

* 4,4′-dihydroxybiphenyl;
* 2,2-bis-(4-hydroxyphenyl)-propane;
* 2,2-bis-(3,5-dimethyl-4-hydroxyphenyl)-propane;
* bis-(4-hydroxyphenyl)-methane.

5. Polycarbonates according to claim 1, characterized in that the compound (3) is selected from among

those falling within the scope of formula (II) wherein the halogen is chlorine and the corresponding compounds in which the ring to which R and $R_1$ radicals are linked, is a saturated ring.

6. Polycarbonates according to claim 1, characterized in that the compound (3) is selected from among:

* N-4-chlorobenzoyl-p-hydroxyaniline;
* N-cyclohexanoyl-p-hydroxyaniline;
* N-benzoyl-p-hydroxyaniline;
* N-4-tert.-butylbenzoyl-p-hydroxyaniline;
* N-4-methylbenzoyl-p-hydroxyaniline;
* N-3,5-dichlorobenzoyl-p-hydroxyaniline.

7. Process for preparing the polycarbonates according to claims from 1 to 6, characterized in that

(1) a dihydroxyaromatic compound falling within the scope of formula (I),

(2) a carbonate precursor,

(3) as the chain capping agent, an either aromatic or cycloaliphatic p-hydroxyanilidic compound selected from among the compounds falling within the scope of formula (II) and the corresponding compounds in which the ring to which R and $R_1$ substituents are linked, is a saturated ring.

are reacted, with the molar ratio of (3):(1) being comprised within the range of from 2:100 to 10:100.

8. Process according to claim 7, characterized in that said molar ratio of (3):(1) is comprised within the range of from 3.5:100 to 7:100.

9. Process according to claim 7, characterized in that the carbonate precursor is selected from among phosgene or aryl, alkyl or arylalkyl esters of carbonic acid, or chloroformyl-capped polycarbonate oligomers having a molecular weight comprised within the range of from 400 to 2,000, obtained by means of the reaction of phosgene with a portion of the total amount of the dihydroxyaromatic compound (I).

10. Process according to claim 9, characterized in that the precursor of carbonate is a chloroformyl-capped polycarbonate oligomer.